(19) **Europäisches Patentamt / European Patent Office / Office européen des brevets**

(11) **EP 4 664 878 A1**

(12) **EUROPEAN PATENT APPLICATION**

(43) Date of publication:
**17.12.2025 Bulletin 2025/51**

(21) Application number: **24315289.9**

(22) Date of filing: **13.06.2024**

(51) International Patent Classification (IPC):
**H04N 19/105** $^{(2014.01)}$   **H04N 19/147** $^{(2014.01)}$
**H04N 19/159** $^{(2014.01)}$   **H04N 19/176** $^{(2014.01)}$
**H04N 19/593** $^{(2014.01)}$

(52) Cooperative Patent Classification (CPC):
**H04N 19/105; H04N 19/147; H04N 19/159;**
**H04N 19/176; H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Beijing Xiaomi Mobile Software Co.,**
**Ltd.**
**Beijing 100085 (CN)**

(72) Inventors:
• **Ghaznavi Youvalari, Ramin**
 **Beijing, 100085 (CN)**
• **Abdoli, Mohsen**
 **Beijing, 100085 (CN)**
• **Tissier, Alexandre**
 **Beijing, 100085 (CN)**

(74) Representative: **Zimmermann, Tankred Klaus et al**
 **Schoppe, Zimmermann, Stöckeler**
 **Zinkler, Schenk & Partner mbB**
 **Patentanwälte**
 **Radlkoferstrasse 2**
 **81373 München (DE)**

(54) **METHOD AND APPARATUS FOR OBTAINING ONE OR MORE VIRTUAL INTRA PREDICTION MODES (VIPMS)**

(57)    A method and an apparatus of processing one or more blocks of a picture obtain one or more virtual intra prediction modes, VIPMs, using one or more prediction samples of the block and one or more template samples from a reconstructed neighborhood of the block, or at least a plurality of prediction samples of the block, or one or more prediction samples of the block obtained by an intra prediction mode fusion, IPM-fusion, based prediction.

Fig. 14

**EP 4 664 878 A1**

## Description

### Technical Field

The present disclosure generally relates to the field of encoding/decoding pictures; images or videos, and embodiments of the present disclosure concern improvements regarding a prediction. More specific embodiments of the present disclosure relate to obtaining one or more virtual intra prediction modes (VIPMs) that may be used, e.g., for a transform selection for certain modes, like non-angular modes.

### Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).

For encoding and decoding of a picture, a virtual intra prediction mode (VIPM) or a primary intra prediction mode (IPM) is that may be used, e.g., for a transform selection for certain modes, like non-angular modes.

Thus, there is a need to provide further improvements for obtaining VIPM(s) be applied for encoding and decoding of a picture, an image or a video.

### Summary

The present disclosure provides a method of processing one or more blocks of a picture, the method comprising: obtaining one or more virtual intra prediction modes, VIPMs, using

- one or more prediction samples of the block and one or more template samples from a reconstructed neighborhood of the block, or
- at least a plurality of prediction samples of the block, or
- one or more prediction samples of the block obtained by an intra prediction mode fusion, IPM-fusion, based prediction.

Optionally, the one or more VIPMs are obtained by using a texture analysis method, wherein the texture analysis method maps a texture pattern to corresponding intra directions, e.g., by using a decoder side intra mode derivation, DIMD, process or a template-based intra mode derivation, TIMD, process.

Optionally, for obtaining the one or more VIPMs using the one or more prediction samples and the one or more template samples, the method comprises:

- selecting one or more of the template samples, and
- using the selected template samples and the prediction samples for obtaining the VIPM.

Optionally,

- at least one of a plurality of template histograms of gradients, template HoGs, is selected for combining with a prediction HoG into a combined HoG, and
- an intra mode having a highest amplitude in the combined HoG is selected as the VIPM.

Optionally, the one or more of the template samples are selected according to

- a similarity between the template samples and the prediction samples, or
- an index or a flag identifying the one or more templates to be selected,

wherein the similarity may include one or more of the following:

- a similarity of the VIPMs of the template and prediction samples, or
- a similarity of mean values of the template and prediction samples.

Optionally, the method comprises:

- testing at least two combinations of the prediction samples with the above template samples and the left side template samples,

- selecting a best preforming combination, e.g., according to a rate-distortion optimization, and
- inserting an index or a flag into a data stream, e.g., a bitstream, including data representing the picture, wherein the index or the flag identifies the selected combination.

Optionally, for obtaining the one or more VIPMs using at least the plurality of prediction samples, the method comprises:

- obtaining N VIPM candidates from at least the prediction samples, N being an integer with N≥2,
- sorting the obtained VIPM candidates based on distortion costs, wherein the distortion costs may be obtained using a defined template of the reconstructed neighborhood of the block, and
- selecting the VIPM candidate with the lowest distortion cost as the VIPM.

Optionally, the method comprises:

- using each VIPM candidate to predict template samples of the defined template, and
- determining the distortion costs using a distortion metric for the template prediction.

Optionally, the template samples are predicted using a template-based intra mode derivation, TIMD, process.
Optionally,

a histogram of gradients, HoG, is obtained for the prediction block samples, and wherein from the HoG a certain number of IPMs is included into a VIPM candidate list, e.g., the n best IPMs, with n=N or n≤, or respective histograms of gradients, HoGs, are obtained for the prediction block samples and for the template samples, and wherein from each of the HoGs a certain number of IPMs is included into a VIPM candidate list, e.g., the respective best IPMs, and wherein, if the VIPM candidate list includes less than the N VIPM candidates, the method may comprise:

- filling the VIPM candidate list by including VIPM values from the one or more HoGs, which are nearby of the obtained VIPM candidates.

Optionally, for obtaining the one or more VIPMs using one or more prediction samples of the block obtained by the IPM-fusion based prediction, the method comprises:

- deriving the VIPM using a texture analysis method on a combined prediction obtained by the IPM-fusion, based prediction,

wherein the texture analysis method may include a DIMD process applied to the combined prediction, and wherein the VIPM may be obtained from the final prediction samples of the IPM-fusion based prediction.
Optionally, the obtained one or more VIPMs are used for a transform selection of the block and/or for a transform selection of one or more future blocks,

wherein the obtained one or more VIPMs may be stored for use for an intra prediction of one or more future blocks, and wherein the obtained one or more VIPMs may be used for the transform selection of another block in a different channel, e.g., a chroma block may use a VIPM of the co-located luma block for the transform selection.

The present disclosure provides a non-transitory computer-readable storage medium comprising instructions which, when executed by a computer, cause the computer to carry out the method of any one of the embodiments of the present disclosure.
The present disclosure provides an apparatus of processing one or more blocks of a picture, the apparatus comprising:

a virtual intra prediction mode, VIPM, determination module configured to obtain one or VIPMs using

- one or more prediction samples of the block and one or more template samples from a reconstructed neighborhood of the block, or
- at least a plurality of prediction samples of the block, or
- one or more prediction samples of the block obtained by an intra prediction mode fusion, IPM-fusion, based prediction.

The present disclosure provides a data stream having encoded thereinto a picture, wherein the data stream comprises:

a flag, the flag indicating a best preforming combination of one or more prediction samples of a block of the picture with one or more template samples from a reconstructed neighborhood of the block for obtaining one or more virtual intra prediction modes, VIPMs, usable for a transform selection of the block.

The technical solutions provided according to embodiments of the present disclosure have the following beneficial effects. In prior art approaches, a VIPM or a primary IPM may be sub-optimal for determining a suitable transform for a currently processed block of a picture and/or may not give the best performing transform coding performance. Embodiments of the present disclosure addresses the above drawbacks by providing approaches for obtaining, e.g., for calculating, a more accurate virtual intra prediction mode (VIPM) to be used, e.g., for a transform selection of non-angular blocks and blocks with IPM-fusion methods. Embodiments provide for a refining of the derived VIPM from the prediction block using texture characteristics of the reconstructed samples from the block's template. Other embodiments provide for an adaptive selection of template side samples for refining a VIPM obtained from the prediction block. Yet other embodiments provide for a selecting of the VIPM among a set of VIPM candidates using template prediction cost.

It is to be understood that the content described in this section is not intended to identify key or critical features of the embodiment of the present disclosure, nor is it intended to limit the scope of the present disclosure. Other features of the present disclosure become readily apparent from the following description.

**Brief Description of the Drawings**

The drawings are explanatory and serve to explain the present disclosure, and are not to be construed to limit the present disclosure to the illustrated embodiments.

Fig. 1 is a block diagram of a conventional video encoder;

Fig. 2 is a block diagram of a conventional video decoder;

Fig. 3 illustrates a Low-Frequency Non-Separable Transform (LFNST) process; '

Fig. 4(A) illustrates a Region-Of-Interest (ROI) of a CU for a transform LFNST16;

Fig. 4(B) illustrates a Region-Of-Interest (ROI) of a CU for a transform LFNST8;

Fig. 5 illustrates a table showing the mapping of intra prediction modes to the LFNST set index;

Fig. 6 illustrates an overview of proposed non-separable primary transforms (NSPTs) among existing LFNSTs.

Fig. 7 illustrates a context modeling for LFNST/NSPT coefficients;

Fig. 8 illustrates the use of MIP prediction samples to build a histogram of gradients (HoG);

Fig. 9 illustrates template-based intra mode derivation (TIMD) templates for a cost determination or calculation;

Fig. 10 illustrates three extrapolation filter-based intra prediction (EIP) filter shapes;

Fig. 11 illustrates three types of reconstructed areas for an EIP filter;

Fig. 12 illustrates an intra template matching search area for the Intra template matching prediction (IntraTMP) mode;

Fig. 13 illustrates spatial geometric partitioning mode (GPM) candidates;

Fig. 14 illustrates a GPM template;

Fig. 15 illustrates a GPM blending;

Fig. 16 illustrates an example of a block and the associated templates;

Fig. 17(A)-17(C) illustrate flow diagrams of methods of obtaining one or more virtual intra prediction modes (VIPMs) in accordance with embodiments of the present disclosure;

Fig. 18 illustrates a flow diagram of an embodiment of deriving or selecting a VIPM from template samples and prediction samples.

Fig. 19 illustrates a combining of histogram of gradients for a VIPM derivation from all template samples and prediction samples in accordance with embodiments of the present disclosure;

Fig. 20 illustrates a combining of histogram of gradients for a VIPM derivation from only the above template samples and prediction samples in accordance with embodiments of the present disclosure;

Fig. 21 illustrates a flow diagram of an embodiment of deriving or selecting a VIPM using a template prediction based VIPM selection.

Fig. 22 illustrates a VIPM derivation from VIPM list filled by nearby VIPM modes in accordance with embodiments of the present disclosure;

Fig. 23 illustrates a flow diagram of a method for decoding an encoded data stream in accordance with embodiments of the present disclosure;

Fig. 24          illustrates a flow diagram of a method for encoding a picture into an encoded data stream in accordance with embodiments of the present disclosure;

Fig. 25          illustrates a block diagram of an apparatus of predicting one or more blocks of a picture in accordance with embodiments of the present disclosure;

Fig. 26          illustrates a block diagram of a decoder for decoding an encoded data stream in accordance with embodiments of the present disclosure;

Fig. 27          illustrates a block diagram of an encoder for encoding a picture into an encoded data stream in accordance with embodiments of the present disclosure;

Fig. 28          illustrates a data stream in accordance with embodiments of the present disclosure; and

Fig. 29          illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

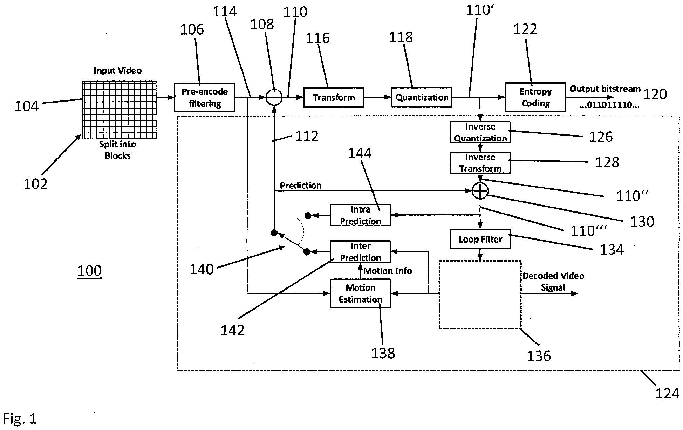

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110''' that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110'''. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

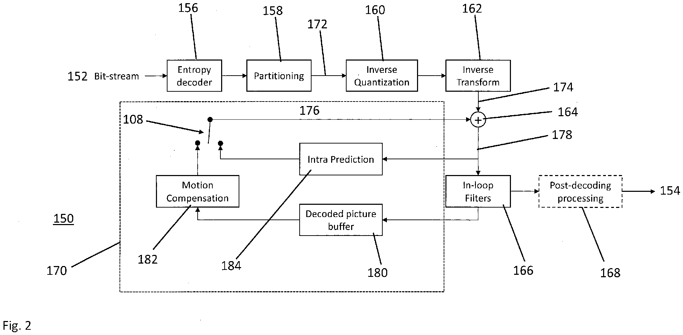

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Transform coding in VVC

In VVC, large block-size transforms, up to $64 \times 64$ in size, are enabled, which is primarily useful for higher resolution video, e.g., 1080p and 4K sequences. High frequency transform coefficients are zeroed out for the transform blocks with a size (width or height, or both width and height) equal to 64, so that only the lower-frequency coefficients are retained. For example, for a $M \times N$ transform block, with M as the block width and N as the block height, when M is equal to 64, only the left 32 columns of transform coefficients are kept. Similarly, when N is equal to 64, only the top 32 rows of transform coefficients are kept. When a transform skip mode is used for a large block, the entire block is used without zeroing out any values. In addition, a transform shift is removed in the transform skip mode.

*Multiple transform selection (MTS) for core transform*

In addition to DCT-II which has been employed in HEVC, a Multiple Transform Selection (MTS) scheme is used for residual coding both inter and intra coded blocks. It uses multiple selected transforms from the DCT8/DST7. The transform matrices are DST-VII and DCT-VIII. The table below shows the basis functions of the selected DST/DCT.

| Transform Type | Basis function $T_i(j)$, $i, j = 0, 1,..., N-1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ where, $\omega_0 = \begin{cases} \sqrt{\frac{2}{N}} & i = 0 \\ 1 & i \neq 0 \end{cases}$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

Transform basis functions of DCT-II/ VIII and DSTVII for N-point input

In order to keep the orthogonality of the transform matrix, the transform matrices are quantized more accurately than the transform matrices in HEVC. To keep the intermediate values of the transformed coefficients within the 16-bit range, after horizontal and after vertical transform, all the coefficients are to have 10-bit.

In order to control the MTS scheme, separate enabling flags are specified at the Sequence Parameter Set (SPS) level for intra and inter, respectively. When MTS is enabled at SPS, a CU level flag is signaled to indicate whether MTS is applied or not. MTS may be applied only for luma. The MTS signaling is skipped when one of the below conditions is applied.

- The position of the last significant coefficient for the luma transform block (TB) is less than 1, i.e., DC only.
- The last significant coefficient of the luma TB is located inside the MTS zero-out region.

If a MTS CU flag is equal to zero, then DCT2 is applied in both directions. However, if the MTS CU flag is equal to one, then two other flags are additionally signaled to indicate the transform type for the horizontal and vertical directions, respectively. A transform and signaling mapping table is shown below. A unified transform selection for intra sub-partitions (ISP) and an implicit MTS is used by removing the intra-mode and block-shape dependencies. If a current block is in ISP mode or if the current block is an intra block and both intra and inter explicit MTS is on, then only DST7 is used for both horizontal and vertical transform cores. When it comes to transform matrix precision, 8-bit primary transform cores are used. Therefore, all the transform cores used in HEVC are kept the same, including 4-point DCT-2 and DST-7, 8-point, 16-point and 32-point DCT-2. Also, other transform cores including 64-point DCT-2, 4-point DCT-8, 8-point, 16-point, 32-point DST-7 and DCT-8, use 8-bit primary transform cores.

| MTS_CU_flag | MTS_Hor_flag | MTS_Ver_flag | Intra/inter | |
|---|---|---|---|---|
| | | | Horizontal | Vertical |
| 0 | | | DCT2 | |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |

Transform and signaling mapping table

To reduce the complexity of large size DST-7 and DCT-8 blocks, high frequency transform coefficients are zeroed out for the DST-7 and DCT-8 blocks with a size (width or height, or both width and height) equal to 32. Only the coefficients within the 16x16 lower-frequency region are retained.

As in HEVC, the residual of a block may be coded using a transform skip mode. To avoid a redundancy of syntax coding, the transform skip flag is not signaled when the CU level MTS_CU_flag is not equal to zero. An implicit MTS transform is set to DCT2 when a low-frequency non-separable transform (LFNST) or a matrix-based intra prediction (MIP) is activated for the current CU. Also the implicit MTS may be still enabled when MTS is enable for inter coded blocks.

*Low-frequency non-separable transform (LFNST)*

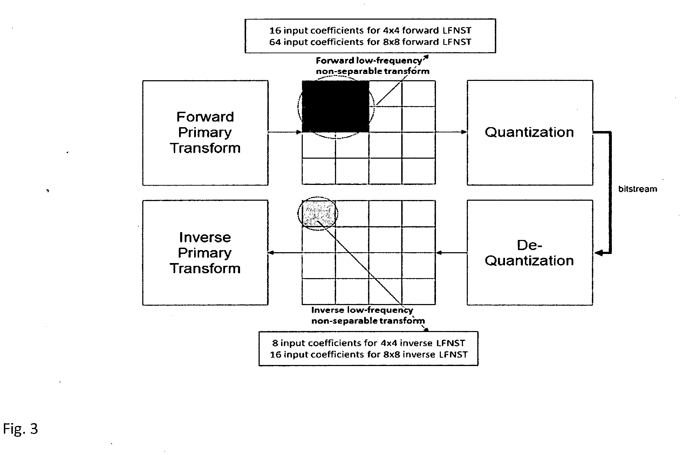

In VVC, LFNST is applied between the forward primary transform and the quantization (at encoder) and between the de-quantization and the inverse primary transform (at decoder side) as shown in Fig. 3. In LFNST, a 4x4 non-separable transform or an 8x8 non-separable transform is applied according to block size. For example, 4x4 LFNST is applied for small blocks (i.e., min(width, height) < 8) and 8x8 LFNST is applied for larger blocks (i.e., min(width, height) > 4).

The application of a non-separable transform, which is being used in LFNST, is as follows:

To apply a 4x4 LFNST, the 4x4 input block X

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

is first represented as a vector $\vec{X}$ :

$$\vec{X} = \begin{bmatrix} X_{00} & X_{01} & X_{02} & X_{03} & X_{10} & X_{11} & X_{12} & X_{13} & X_{20} & X_{21} & X_{22} & X_{23} & X_{30} & X_{31} & X_{32} & X_{33} \end{bmatrix}^T$$

The non-separable transform is obtained as $\vec{F} = T \cdot \vec{X}$ , where $\vec{F}$ indicates the transform coefficient vector, and T is a 16x16 transform matrix. The 16x1 coefficient vector $\vec{F}$ is subsequently re-organized as 4x4 block using the scanning order for that block (horizontal, vertical or diagonal). The coefficients with smaller index are placed with the smaller scanning index in the 4x4 coefficient block.

*Reduced Non-separable transform*

LFNST (low-frequency non-separable transform) is based on a direct matrix multiplication approach to apply a non-separable transform so that it is implemented in a single pass without multiple iterations. However, the non-separable transform matrix dimension needs to be reduced to minimize computational complexity and memory space to store the transform coefficients. Hence, a reduced non-separable transform (RST) method is used in LFNST. The main idea of the reduced non-separable transform is to map a N (N is commonly equal to 64 for an 8x8 Non-Separable Secondary Transforms (NSST)) dimensional vector to an R dimensional vector in a different space, where N/R (R < N) is the reduction factor. Hence, instead of a NxN matrix, the RST matrix becomes an R×N matrix as follows:

$$T_{RxN} = \begin{bmatrix} t_{11} & t_{12} & t_{13} & \dots & t_{1N} \\ t_{21} & t_{22} & t_{23} & & t_{2N} \\ & & \vdots & \ddots & \vdots \\ t_{R1} & t_{R2} & t_{R3} & \cdots & t_{RN} \end{bmatrix}$$

where the R rows of the transform are R bases of the N dimensional space. The inverse transform matrix for RST is the transpose of its forward transform. For an 8x8 LFNST, a reduction factor of 4 is applied, and a 64x64 direct matrix, which is a conventional 8x8 non-separable transform matrix size, is reduced to a 16x48 direct matrix. Hence, the 48×16 inverse RST matrix is used at the decoder side to generate core (primary) transform coefficients in 8×8 top-left regions. When 16x48 matrices are applied instead of 16x64 matrices with the same transform set configuration, each of which takes 48 input data from three 4x4 blocks in a top-left 8x8 block excluding a right-bottom 4x4 block. With the help of the reduced dimension, memory usage for storing all LFNST matrices is reduced from 10KB to 8KB with reasonable performance drop. In order to reduce complexity LFNST is restricted to be applicable only if all coefficients outside the first coefficient sub-group are non-significant. Hence, all primary-only transform coefficients have to be zero when LFNST is applied. This allows a conditioning of the LFNST index signaling on the last-significant position, and hence avoids the extra coefficient scanning in the current LFNST design, which is needed for checking for significant coefficients at specific positions only. The worst-case handling of LFNST (in terms of multiplications per pixel) restricts the non-separable transforms for 4x4 and 8x8 blocks to 8x16 and 8x48 transforms, respectively. In those cases, the last-significant scan position has to be less than 8 when LFNST is applied, for other sizes less than 16. For blocks with a shape of 4xN and Nx4 and N > 8, the proposed restriction implies that the LFNST is now applied only once, and to the top-left 4x4 region only. As all primary-only coefficients are zero when LFNST is applied, the number of operations needed for the primary transforms is reduced in such cases. From an encoder perspective, the quantization of coefficients is remarkably simplified when LFNST transforms are tested. A rate-distortion optimized quantization has to be done at maximum for the first 16 coefficients (in scan order), the remaining coefficients are enforced to be zero.

*LFNST transform selection*

In total, there are 4 transform sets, and 2 non-separable transform matrices (kernels) per transform set are used in LFNST. The mapping from the intra prediction mode to the transform set is pre-defined as shown in the table below. If one of three Cross-Component Linear Model (CCLM) modes (INTRA_LT_CCLM, INTRA_T_CCLM or INTRA_L_CCLM) is used for the current block (81 <= predModeIntra <= 83), transform set 0 is selected for the current chroma block. For each transform set, the selected non-separable secondary transform candidate is further specified by the explicitly signaled LFNST index. The index is signaled in a bit-stream once per Intra CU after the transform coefficients.

| IntraPredMode | Transform set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |

Transform selection table

*LFNST index Signaling and interaction with other tools*

Since LFNST is restricted to be applicable only if all coefficients outside the first coefficient sub-group are non-significant, the LFNST index coding depends on the position of the last significant coefficient. In addition, the LFNST index is context coded but does not depend on the intra prediction mode, and only the first bin is context coded. Furthermore, LFNST is applied for intra CU in both intra and inter slices, and for both Luma and Chroma. If a dual tree is enabled, LFNST indices for Luma and Chroma are signaled separately. For an inter slice mode (the dual tree is disabled), a single LFNST index is signaled and used for both Luma and Chroma.

Considering that a large CU being greater than 64x64 is implicitly split (TU tiling) due to the existing maximum transform size restriction (64x64), an LFNST index search may increase data buffering by four times for a certain number of decode pipeline stages. Therefore, the maximum size that LFNST is allowed is restricted to 64x64. Note that LFNST is enabled with DCT2 only. The LFNST index signaling is placed before the MTS index signaling.

From the use of scaling matrices for perceptual quantization is not evident that the scaling matrices that are specified for the primary matrices may be useful for LFNST coefficients. Hence, using the scaling matrices for LFNST coefficients is not allowed. For a single-tree partition mode, a chroma LFNST is not applied.

Transform coding in Enhanced Compression Model (ECM)

In the current VVC design, for MTS, only DST7 and DCT8 transform kernels are utilized which are used for intra and inter coding.

Additional primary transforms including DCT5, DST4, DST1, and an identity transform (IDT) are employed. Also, a MTS set is made dependent on the TU size and intra mode information. For blocks predicted via an intra template matching prediction (IntraTMP), a Decoder side intra mode derivation (DIMD) process is used on the prediction block to derive an intra mode that is used for the transform selection. Specifically, a horizontal gradient and a vertical gradient are obtained for each predicted sample to build a histogram of gradients (HoG). Then the intra prediction mode with the largest histogram amplitude values is used to select the MTS transform set.

Overall, 16 different TU sizes are considered, and for each TU size 5 different classes are considered depending on intra-mode information. For each class, 1, 4 or 6 different transform pairs are considered. The number of intra MTS candidates are adaptively selected (between 1, 4 and 6 MTS candidates) depending on the sum of absolute value of the transform coefficients. The sum is compared against two fixed thresholds to determine the total number of allowed MTS candidates:

    1 candidate: sum <= th0
    4 candidates: th0 < sum <= th1
    6 candidates: sum > th1

Although a total of 80 different classes are considered, some of the different classes often share exactly the same transform set. So there are 58 (less than 80) unique entries in the resultant look-up-table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80.

*Inter MTS optimization in ECM*

For the MTS of inter-coded CUs, four candidates: {(DST7, DST7), (DST7, DCT8), (DCT8, DST7), (DCT8, DCT8)} are used for every CU. For the larger resolution sequences (width > 1080) the maximum CU size for Inter-MTS usage is set to 32 (i.e., Inter-MTS is used for CU with a width <=32 and a height <=32), and for the remaining sequences (smaller resolution) it is set to 16. For 4-pt, 8-pt and 16-pt transforms, the current Adaptive Multiple Transform (AMT) cores, i.e., DST-7 and DCT-8, are replaced with separable Karhunen-Loève Transforms (KLTs), as proposed in JVET-J0021.

*LFNST extension with large kernel in ECM*

The LFNST design in VVC is extended as follows:

-    The number of LFNST sets (S) and candidates (C) are extended to S=35 and C=3, and the LFNST set (lfnstTrSetIdx) for a given intra mode (predModeIntra) is derived according to the following formula:

        ◦ For predModeIntra < 2, lfnstTrSetIdx is equal to 2
        ◦ lfnstTrSetIdx = predModeIntra, for predModeIntra in [0,34]
        ◦ lfnstTrSetIdx = 68 - predModeIntra, for predModeIntra in [35,66]

-    Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.

The kernel dimensions are specified by:
(LFSNT4, LFNST8*, LFNST16*) = (16x16, 32x64, 32x96)

The forward LFNST is applied to the top-left low frequency region, which is called the Region-Of-Interest (ROI). When LFNST is applied, primary-transformed coefficients that exist in the region other than ROI are zeroed out, which is not changed from the VVC standard.

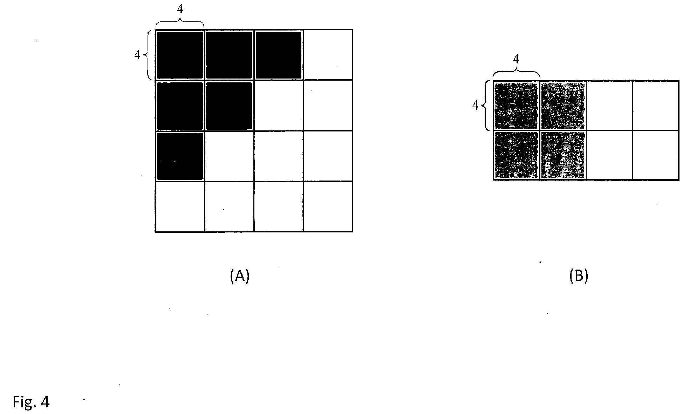

The ROI for LFNST16 is depicted in Fig. 4(A). It consists of six 4x4 sub-blocks, which are consecutive in scan order. Since the number of input samples is 96, the transform matrix for forward LFNST16 may be Rx96. R may be chosen to be 32, and 32 coefficients (two 4x4 sub-blocks) are generated from forward LFNST16 accordingly, which are placed following the coefficient scan order.

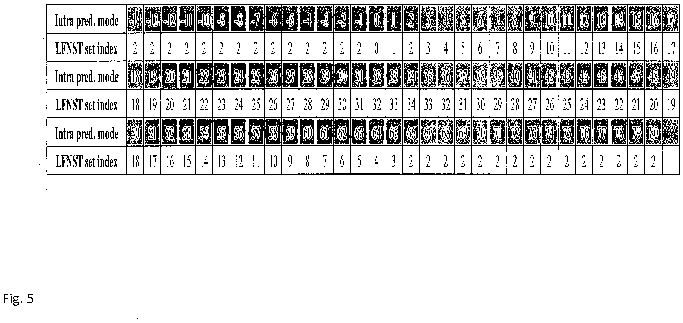

The ROI for LFNST8 is shown in Fig. 4(B). The forward LFNST8 matrix may be Rx64 and R is chosen to be 32. The generated coefficients are located in the same manner as with LFNST16. The mapping from intra prediction modes to these sets is shown in the Table illustrated in Fig. 5.

*Non-separable primary transform (NSPT) for intra coding*

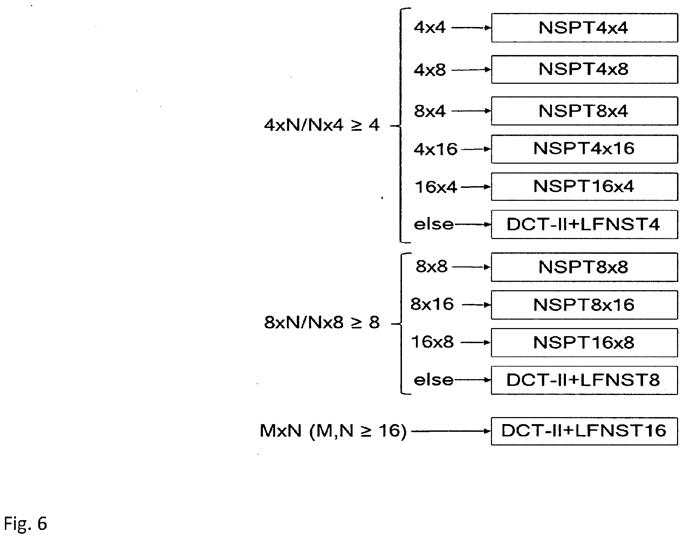

The separable DCT-II plus LFNST transform combinations are replaced with NSPT for the block shapes 4x4, 4x8, 8x4 and 8x8, 4x16, 16x4, 8x16 and 16x8. The affected block sizes are summarized in Fig. 6 which illustrates an overview of proposed NSPTs among existing LFNSTs.

All NSPTs consist of 35 sets and 3 candidates (similar to the current LFNST). The kernels of NSPTs have the following shapes:

- NSPT4x4: 16x16
- NSPT4x8/NSPT8x4: 32x20
- NSPT8x8: 64x32
- NSPT4x16/NSPT16x4: 64x24
- NSPT8x16/NSPT16x8: 128x40
- NSPT4x32/NSPT32x4: 128x20
- NSPT8x32/NSPT32x8: 256x24

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively. For NSPT4x32/NSPT32x4 and NSPT8x32/NSPT32x8, the remaining 108 and 232 positions in each transform block are zeroed-out, respectively.

*NSPT/LFNST context modeling for transform coefficient coding*

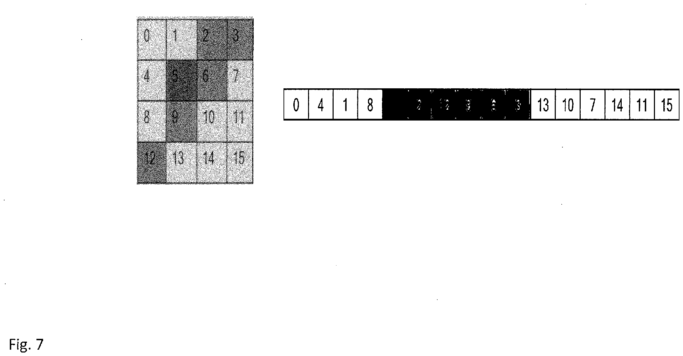

For the coding of LFNST/NSPT coefficients, a modified context model using the previous 5 coefficients in the coding order are used for context derivation instead of the 2D coefficient neighborhood. Fig. 7 illustrates the context modeling for LFNST/NSPT coefficients. The lfnstIdx is signaled after all last_sig_coeff_pos syntax elements in a CU since lfsntIdx is required for parsing the transform coefficients.

*Utilizing LFNST/NSPTfor MIP, intraTMP and inter coding*

To utilize LFNST/NSPT for MIP, intraTMP and inter coding, a virtual intra prediction mode (VIPM) is employed. Each VIPM represents a kind of feature, for example, a specific direction. The VIPM is derived by applying a DIMD-like process to the prediction block. The horizontal and vertical gradients of pixels inside the prediction block are obtained using a Sobel operator and the horizontal and vertical gradients of each pixel are used to derive a direction. The amplitudes of the gradient of each pixel are accumulated for the corresponding direction. The intra prediction mode corresponding to the strongest accumulation is selected as the VIPM. With the VIPM, the transform set of LFNST/NSPT may be derived.

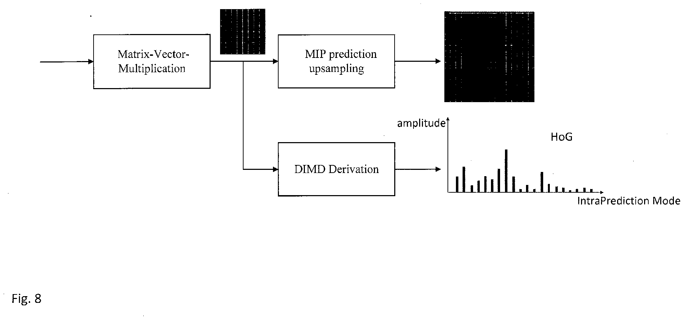

For MIP, the DIMD-like process is done before upsampling. Specifically, a horizontal gradient and a vertical gradient are obtained for each predicted sample to build a HoG, as is shown in Fig. 8. Then the intra prediction mode with the largest histogram amplitude value is used to determine the LFNST transform set and the LFNST Transpose flag.

For inter coding, the kernel mapping method is the same as that for intra LFNST/NSPT.

Description of relevant tools in Enhanced Compression Model (ECM)

A brief description of relevant ECM tools is provided here. More information may be obtained from the JVET-AG2025 document.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in IntraTMP or intra block copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the CCLM. For example, the division operation in the orientation determination

$$Orient = G_y/G_x$$

is obtained, e.g., computed by the following LUT-based scheme:

$$x = Floor(\ Log2(\ Gx\ )\ )$$

$$normDiff = (\ (\ Gx<<4\ )\ >>\ x\ )\ \&\ 15$$

$$x +=(\ 3 + (\ normDiff\ !=\ 0\ )\ ?\ 1:0\ )$$

$$Orient = (Gy*\ (\ DivSigTable[\ normDiff\ ]\ |\ 8\ ) + (\ 1<<(\ x\text{-}1\ )\ )) >> x$$

where

$$DivSigTable[16] = \{\ 0, 7, 6, 5, 5, 4, 4, 3, 3, 2, 2, 1, 1, 1, 1, 0\ \}.$$

For a block of size $W \times H$, the weight for each of the five derived modes is modified if one of the above or left histogram magnitudes is twice larger than the other one. In this case, the weights are location dependent and computed as follows:

If the above histogram is twice the left, then:

$$w_i(x,y) = wDimd_i + \Delta_i - 2\Delta_i \frac{y}{(H-1)}.$$

If the left histogram is twice the above, then:

$$w_i(x,y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.

The derived intra modes are included into a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Fusion for template-based intra mode derivation (TIMD)*

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:

- The non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost:

$$weight_i = \frac{sumSATD - costMode_i}{2 \times sumSATD}, \; sumSATD = \sum_{j=1}^{3} costMode_i.$$

Otherwise, the non-angular intra prediction mode is not used in the prediction.

The costs of the two selected modes are compared with a threshold, and the cost factor of 2 may be applied as follows:

$$costMode2 < 2*costMode1.$$

If this condition is true, the fusion is applied, otherwise the only model is used.

The weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by the CCLM.

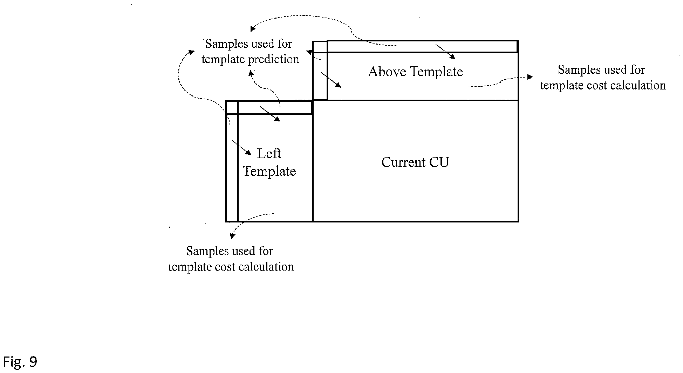

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 9 illustrating the TIMD templates for the cost determination or calculation

*Extrapolation filter-based intra prediction (EIP) mode*

In the EIP mode, the samples in a CU are predicted from the top-left position to the bottom-right position by applying an extrapolation filter to neighboring reconstructed samples or predicted samples. The EIP mode uses a 15-tap filter for prediction as below:

$$pred_{(x,y)} = \sum_{i=0}^{14} \left( c_i \times t_{(x-offsetX_i, y-offsetY_i)} \right)$$

where $pred_{(x,y)}$ is the predicted value at position (x, y) in the CU, $c_i$ is the filter coefficient, and $t_{(x-offsetX_i, y-offsetY_i)}$ are the reconstructed samples or predicted samples.

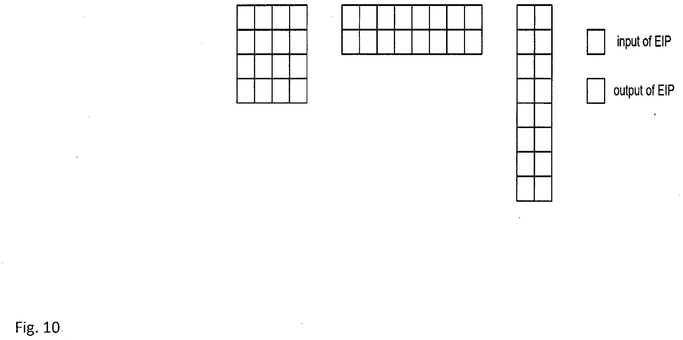

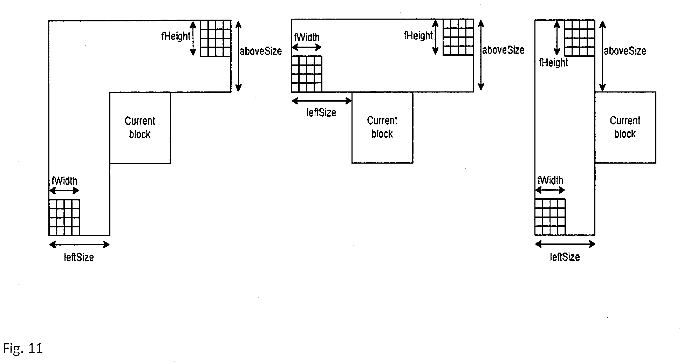

The EIP filter may be derived from the neighboring reconstructed samples or may be inherited from the previous EIP coded blocks. There are three EIP filter shapes and three types of reconstructed area supported in ECM as shown in Fig. 10 and in Fig. 11.

For a CU coded in the EIP mode, an EIP merge flag is signaled to indicate whether the EIP filter is inherited from previous blocks coded in EIP mode. When the EIP merge flag is true, an EIP merge list is constructed from the spatial adjacent, spatial non-adjacent, temporal and history candidates. The position and inclusion order of these candidates are the same as those used in the cross-component prediction (CCP) merge candidate list. An EIP merge index is further signaled to indicate which EIP merge candidate is selected. The filter shape and the filter coefficients of the selected candidate are then inherited to code the CU.

When the EIP merge flag is false, the EIP filter is derived from the neighboring reconstructed samples and the relevant syntax element is signaled to indicate which one of the three types of reconstructed areas and which one of the three filter shapes are used for the CU. The selected filter moves in the selected reconstructed area either horizontally or vertically with a one-pixel step to construct the auto-correlation matrix and the cross-correlation vector. The determination of coefficients from the auto-correlation matrix and the cross-correlation vector is the same as that in the Convolutional Cross-Component Model (CCCM).

After generating the prediction samples of the CU using the EIP filter, an intra prediction mode is derived by applying the DIMD process to the prediction samples. Specifically, a horizontal gradient and a vertical gradient are obtained for each predicted sample to build a histogram of gradients. Then the intra prediction mode corresponding to the largest histogram count is used to determine the LFNST, NSPT or MTS transform set.

*Intra template matching prediction (IntraTMP)*

Intra template matching prediction (IntraTMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

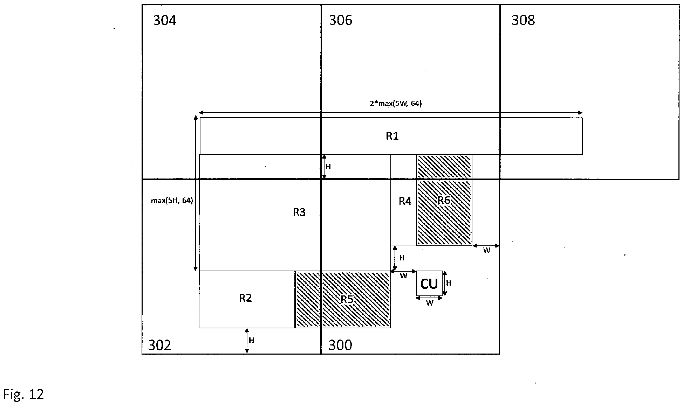

The prediction signal is generated by matching the L-shaped, Top-only or Left-Only causal neighbor of the current block with another block in a predefined search area illustrated in Fig. 12. There are 6 predefined search areas, i.e., R1 to R6 in Fig. 12 which contain the reconstructed samples from the top CTUs 304 to 308 and the left CTU 302 as well as part of the reconstructed samples within the current CTU 300 that are located above, left, bottom-left and top-right to the current block CU.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas. The same template matching cost is used to compare the merge positions and the defaults ones. For bi-directional IBC merge candidate, two candidates are retained corresponding to each reference frame. Similarly, for IntraTMP, two candidates are considered corresponding to the best candidate by template search and the coded candidate.

The sum of absolute differences (SAD) is used as a cost function.

A given search order of the 6 regions is utilized, e.g., R4, R5, R6, R1, R2, and R3. Within each region, the decoder constructs a candidate list of up to "19" template matching block vectors that are ranked in ascending order according to the template cost (SAD). The following modes are supported:

1- Single predictor: A single predictor is selected from the candidate list.

2- Fusion of multiple predictors: multiple predictors are blended multiple to derive the final prediction block. The blending weights are either computed from the template matching cost of each predictor, or with Wiener-filter based weight derivation method.

3- Sub-pel precision: When single predictor is used, sub-pel precision can be used with 1/2-pel precision, 1/4-pel precision and 3/4-pel precision, each with 8 possible directions.

4- Linear filter model: A linear filter can be learned between the reference template and current template and be applied the linear model to reference block. This mode can be used for single predictor when sub-pel precision is not used.

Additionally, IntraTMP with local illumination compensation is allowed. The following considerations are taken:

1- Usages of LIC and FLM (CCCM-like filtering) are mutually exclusive for a given CU.

2- Usages of LIC together with fusion in intra TMP is allowed.

3- Top-only and Left-only template usage for LIC model determination is allowed for screen content coding. For camera-captured coding, only the top-left template is employed.

4- Multi Mode Linear Model (MMLM) is supported similarly to IBC-LIC, for screen content coding.

When LIC is used for a given CU, the Intra TMP search process employs MRSAD rather than SAD distortion function.

The dimensions of all regions (SearchRange_w, SearchRange_h) are set proportional to the block dimension (BlkW, BlkH) to have a fixed number of SAD comparisons per pixel. That is:

$$SearchRange\_w = min(64, a * BlkW)$$

$$SearchRange\_h = min(64, a * BlkH)$$

where 'a' is a constant that controls the gain/complexity trade-off. In practice, 'a' may be equal to 5.

To speed-up the template matching process, the search range of all search regions is subsampled by a factor of 4. After finding the best match, a refinement process is performed. The refinement is done via a second template matching search around the best match with a reduced range.

The Intra template matching tool is enabled for CUs with a size less than or equal to 64 in width and height. This maximum CU size for Intra template matching is configurable.

The Intra template matching prediction mode is signaled at CU level through a dedicated flag when decoder-side intra mode derivation (DIMD) is not used for the current CU.

*Spatial Geometric partitioning mode (SGPM)*

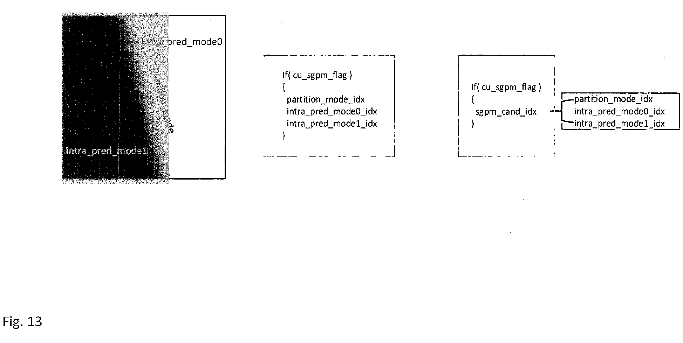

SGPM is an intra mode that resembles the inter coding tool of GPM, where the two prediction parts are generated from an intra predicted process. In this mode, a candidate list is built with each entry containing one partition split and two intra prediction modes as shown in Fig. 13. 26 partition modes and 9 of the intra prediction modes are used to form the combinations. The length of the candidate list is set equal to 16. The selected candidate index is signaled.

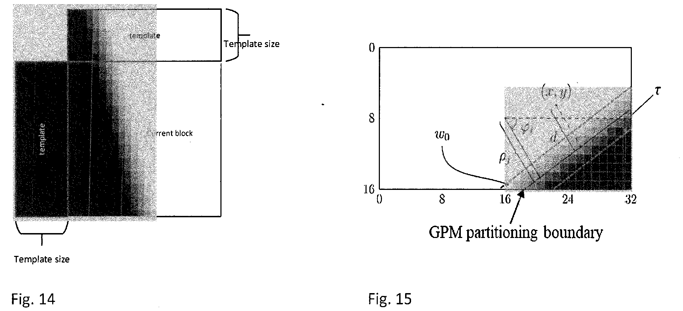

The list is reordered using a template (as is shown in Fig. 14) where SAD between the prediction and reconstruction of the template is used for ordering. The template size is fixed to 1.

For each partition mode, an IPM list is derived for each part using the same intra-inter GPM list derivation. The IPM list size is set to 3. In the list, a TIMD derived mode is replaced by 2 derived modes with horizontal and vertical orientations. The list is further augmented with block-vector based prediction candidates obtained from the adjacent and non-adjacent merge candidates coded in IntraTMP or IBC mode. The template cost is employed to select the up to 6 block vectors. The final list contains up to 9 predictors: 3 regular intra modes and up to 6 block vectors based predictors.

The SGPM mode is applied with a restricted blocks size: 4<=width<=64, 4<=height<=64, width<height*8, height<width*8, width*height>=32.

A Picture Parameter Set (PPS) flag is coded to indicate whether no blending of two intra predictions is allowed. When this PPS flag is set to false, the following adaptive blending is also used for spatial GPM, where blending depth $\tau$ shown in figure below is derived as follows:

- If min(width, height)==4, 1/2 $\tau$ is selected
- else if min(width, height)==8, $\tau$ is selected
- else if min(width, height)==16, 2 $\tau$ is selected
- else if min(width, height)==32, 4 $\tau$ is selected
- else, 8 $\tau$ is selected.

Otherwise (the PPS flag is set to true), 1/4 $\tau$ (see Fig. 15) is always used for spatial GPM coded blocks to make sure no blending is used when SGPM block has partition angle completely horizontal or vertical, and much narrower blending width is used when SGPM block has other partition angles. It is noted that the flag is set to true in current Common Test Conditions (CTC) for the screen content videos.

As described above, in ECM the transform selection for prediction blocks with non-IPM based modes such as MIP, intraTMP (JVET-AD0086), IBC, EIP (JVET-AG0058), and inter predicted blocks are determined by applying a DIMD-like process on the "prediction block" and using the resulted virtual intra prediction mode (VIPM) of the DIMD process in determining the transform mode and/or index for that block. However, the prediction block may contain inaccuracies in representing the texture direction due to the prediction error. Thus, the resulted VIPM of DIMD process from prediction block may be sub-optimal for determining the suitable transform for that block.

The transform selection of IPM-fusion methods such as DIMD, TIMD, SGPM modes is done by using the primary IPM mode of the corresponding tool as it is assumed that the primary IPM is representing the majority of the block texture. However, this might be sub-optimal as the fusion of multiple IPMs may generate a different texture pattern or direction within the block than the primary IPM mode. Thus, in some cases, using the primary IPM of such tools for transform selection mechanism may not give the best performing transform coding performance.

Embodiments of the present disclosure addresses the above drawbacks by providing approaches for obtaining a more accurate virtual intra prediction mode (VIPM) to be used, e.g., for a transform selection of non-angular blocks and blocks with IPM-fusion methods. Embodiments provide for a refining of the derived VIPM from the prediction block using texture characteristics of the reconstructed samples from the block's template. Other embodiments provide for an adaptive selection of template side samples for refining a VIPM obtained from the prediction block. Yet other embodiments provide for a selecting of the VIPM among a set of VIPM candidates using template prediction cost.

Embodiments provide various approaches for improving the intra prediction mode derivation for transform selection of non-IPM based predicted blocks and IPM-fusion based blocks.

In the this specification, the following common definitions and terminologies are used:

- Regular IPM: refers to conventional angular intra prediction modes, planar prediction as well as DC prediction.
- Non-IPM based prediction: refers to blocks that their prediction samples are obtained by means of methods that do not use regular intra prediction methods. Examples of such methods are:

  o Matrix-based intra prediction (MIP)
  o Extrapolation filter-based intra prediction (EIP)
  o Intra template matching prediction (IntraTMP)
  o Intra block copy (IBC)
  o Inter predicted blocks

- IPM-fusion based prediction: refers to blocks that their prediction samples are obtained by means of combining two or more regular IPMs, one or more regular IPMs with a non-IPM based prediction such as intraTMP. Examples of such IPM-fusion based methods are:

  ◦ Fusion for template-based intra mode derivation (TIMD)
  ◦ Decoder side intra mode derivation (DIMD)
  ◦ Spatial Geometric partitioning mode (SGPM)

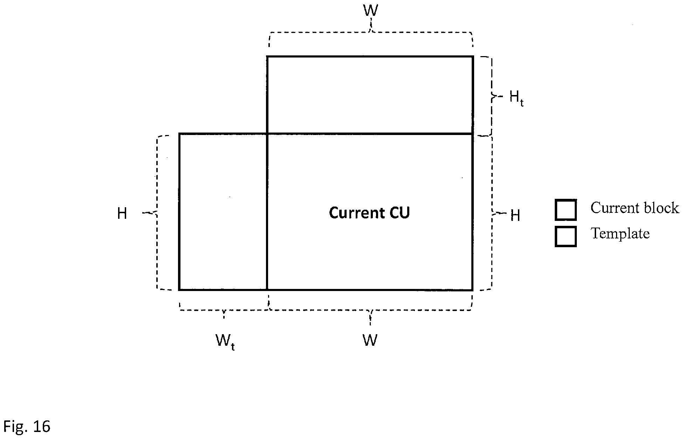

A template is referred to as reconstructed samples from the immediate neighborhood of the block. In some cases, the template may be referred to as reconstructed samples from both above and left neighborhood sides of the current block, in some other cases, the template may only refer to reconstructed samples from one of the neighborhood sides such as above or left. The template dimensions, width and height, may be fixed or may be adaptive, for example based on the block dimension. Fig. 16 shows an example of current block and the associated templates.

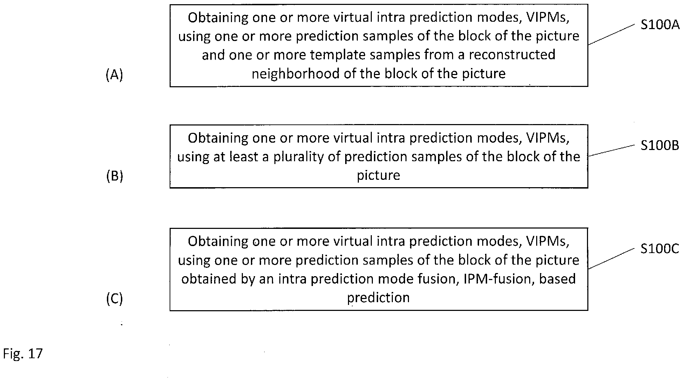

Fig. 17(A) illustrates a flow diagram of an embodiment of a method of processing one or more blocks of a picture. The method includes the following:

S 100A: Obtaining one or more virtual intra prediction modes, VIPMs, using one or more prediction samples of the block of the picture and one or more template samples from a reconstructed neighborhood of the block of the picture.

Fig. 17(B) illustrates a flow diagram of another embodiment of a method of processing one or more blocks of a picture. The method includes the following:

S100B: Obtaining one or more virtual intra prediction modes, VIPMs, using at least a plurality of prediction samples of the block of the picture.

Fig. 17(C) illustrates a flow diagram of yet another embodiment of a method of processing one or more blocks of a picture. The method includes the following:

S100C: Obtaining one or more virtual intra prediction modes, VIPMs, using one or more prediction samples of the block of the picture obtained by an intra prediction mode fusion, IPM-fusion, based prediction.

Thus, according to embodiments, the one or more virtual intra prediction modes are obtained using the prediction samples of the block, e.g., prediction samples obtained by an IPM-fusion based prediction.

According to embodiments, the one or more virtual intra prediction modes are obtained using prediction samples of the block and some of the template samples from a reconstructed neighborhood of the block. For example, the above and/or left side template samples may be used along with the prediction block samples for obtaining VIPMs.

According to embodiments, a decision which template side samples to use may be determined using a similarity metric between the template side samples and prediction block samples. According to the similarity metric, if the template samples are similar enough to the prediction samples, then they are used for VIPM derivation along the prediction samples.

According to embodiments, the similarity metric may be the VIPM of each set of samples. For example, a VIPM of each template side samples may be compared to a VIPM of the prediction samples. In an alternative, the similarity metric may be a mean value of each set of samples.

According to embodiments, the decision which template side samples to use may be determined explicitly. For example, the encoder may test at least two or all the possible combinations {(prediction + aboveTemplate + leftTemplate), (prediction + aboveTemplate), (prediction + leftTemplate), (prediction samples only)} and the best preforming one according to, e.g., a rate-distortion optimization is selected and its index or flag is signaled into the bitstream.

According to embodiments, the VIPM determination process may use a texture analysis mechanism such as DIMD or TIMD for determining the VIPM values.

According to embodiments, the obtained one or more VIPMs may be used in transform selection of the block. The transform may be a multiple transform selection (MTS), a low-frequency non-separable transform (LFNST), a non-separable primary transform (NSPT), or any other transform coding mechanism that relies on intra prediction direction for determining the transform coding of the block.

According to embodiments, at least two VIPMs are obtained from the prediction samples. Then the obtained VIPMs are sorted based on their prediction costs over the defined template from the neighborhood. The prediction cost metric may be SAD, SSE, SATD or any other existing distortion metric.

According to embodiments, the obtained one or more VIPMs may be stored and used in intra prediction of future blocks. For example, VIPMs of current block may be used in most probable mode (MPM) of the future blocks. In another approach, the VIPMs of a block may be used in intra prediction of another block in a different channel. For example, a chroma block may use VIPM of a co-located luma block in intra prediction through direct mode (DM), MPM.

According to embodiments, the transform selection process of a block may use a VIPM of another block in different channel. For example, a chroma block may use VIPM of the co-located luma block in its transform selection mechanism.

Embodiments of the present disclosure are now described in more detail.

VIPM derivation from template samples and prediction samples

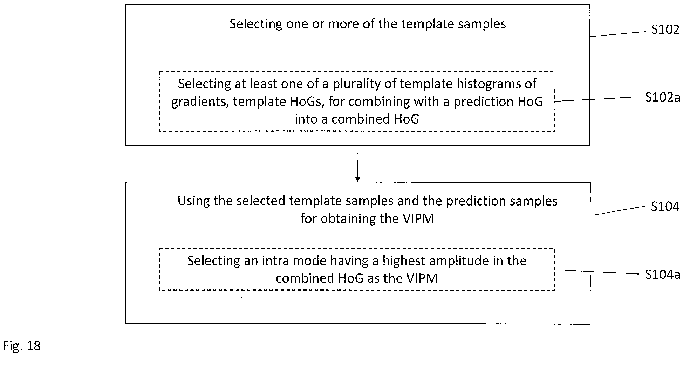

Fig. 18 illustrates a flow diagram of an embodiment of deriving or selecting a VIPM from template samples and prediction samples. The method includes the following: S102: Selecting one or more of the template samples. S104 Using the selected template samples and the prediction samples for obtaining the VIPM.

Optionally, selecting the one or more of the template samples may include selecting S 102a at least one of a plurality of template histograms of gradients, template HoGs, for combining with a prediction HoG into a combined HoG, and using the selected template samples and the prediction samples for obtaining the VIPM may include selecting S 104a an intra mode having a highest amplitude in the combined HoG as the VIPM.

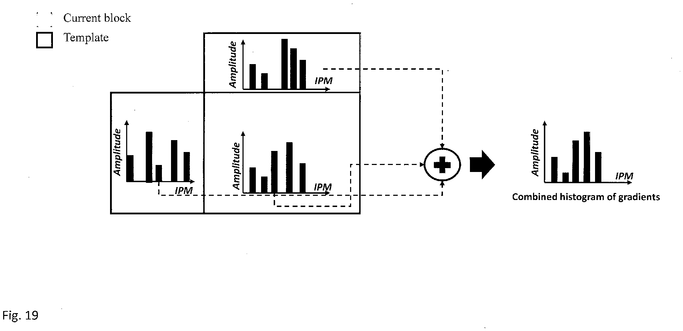

The virtual-IPM mode(s) may be derived using both template samples and prediction samples of the block. The VIPMs may be derived using a texture analysis method, such as DIMD, that maps the texture pattern to corresponding intra directions. For example, when using a DIMD-like method for the VIPM derivation, the histograms of gradients (HoGs) may be obtained using both template and prediction samples within the block. An example of such process is illustrated in Fig. 19, where the DIMD-like method is applied to the above template, the left template and the prediction samples within the block. Then the combined histogram of gradients is formed using the corresponding HoGs from the template and prediction block. The intra mode with highest amplitude in the combined histogram of gradients is then selected and used as VIPM mode in the transform selection for the block.

For example, for a certain IPM, the combined HoG may be obtained as:

$$\mathrm{HoG_{comb}[IPM]} = \mathrm{HoG_{Pred}[IPM]} + \mathrm{HoG_{aboveTmp}[IPM]} \ \mathrm{HoG_{leftTmp}[IPM]}$$

where

| | |
|---|---|
| $\mathrm{HoG_{comb}[IPM]}$ | combined HoG, |
| $\mathrm{HoG_{Pred}[IPM]}$ | prediction HoG |
| $\mathrm{HoG_{aboveTmp}[IPM]}$ | above template HoG |
| $\mathrm{HoG_{leftTmp}[IPM]}$ | left side template HoG |

In accordance with embodiments, the VIPM may be derived using the prediction samples within the block and within one of the template samples. This may be useful when the block samples are correlated only with one of the template side samples. Thus, combining the HoGs of the prediction block with both HoGs from the template may not be an optimal choice. Therefore, according to embodiments the template to be used is selected, and the template choice may be done in various ways.

In one embodiment, the template choice may be done by comparing the histogram of gradients of each template to the histogram of gradients of the prediction block. The HoG of the template that has higher similarity to the HoG of the prediction block is then selected and combined with the HoG of the prediction block. The similarity measure may be for example comparing the best VIPM of the prediction block and the best VIPM of each template side.

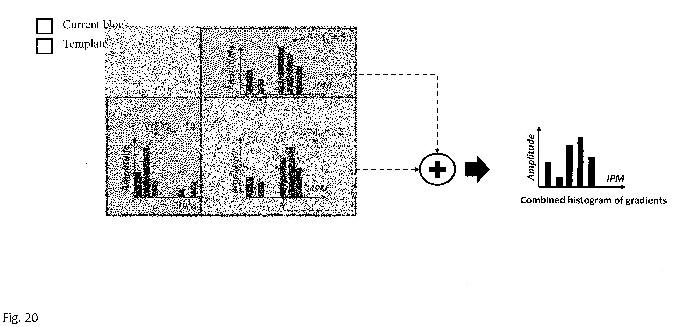

In Fig. 20 an example of combining the prediction block HoG and the HoG of one of the template sides is illustrated. The prediction block's $\mathrm{VIPM_P}$ is 52, above template's $\mathrm{VIPM_T}$ is 50 and left template's $\mathrm{VIPM_L}$ is 10. Since the VIPM$_P$ is closer to VIPM$_T$ and VIPM$_L$ is very different from VIPM$_P$, thus, the HoG of above template is combined with HoG of prediction block.

In another embodiment, the similarity metric for selecting the template may be different than the VIPM based metric. For example, the DC or average values of the prediction block samples, and DC or average values of each template samples may be compared and the template side with similar DC/average values may be selected and used for creating the combined HoG.

In accordance with embodiments, when combining the HoG of prediction block and the HoGs of the template samples, one may use a sub-set of histogram information when combining. For example, if the virtual-IPM of prediction block is VIPM$_P$, then the HoGs around this VIPM value from the template HoGs are used for generating the combined histogram of gradients.

In accordance with embodiments, the choice of template side HoGs to be combined with the prediction block HoG may be done explicitly by signaling a flag or an indicator in the bitstream. For example:

- index 0: both template sides are used,
- index 1: above template side is used,
- index 2: left template side is used.

In accordance with embodiments, when generating the combined HoG, a weighted combination of the HoGs may be considered. For example:

$$\text{HoG}_{\text{comb}}[\text{IPM}] = W_1 \times \text{HoG}_{\text{Pred}}[\text{IPM}] + W_2 \times \text{HoG}_{\text{aboveTmp}}[\text{IPM}] + W_3 \times \text{HoG}_{\text{leftTmp}}[\text{IPM}]$$

where

| | |
|---|---|
| HoG$_{\text{comb}}$[IPM] | combined HoG, |
| HoG$_{\text{Pred}}$[IPM] | prediction HoG |
| HoG$_{\text{aboveTmp}}$[IPM] | above template HoG |
| HoG$_{\text{leftTmp}}$[PM] | left side template HoG |
| Wi | weight for the prediction HoG, |
| Wz | weight for the above template HoG, and |
| W$_3$ | weight for the left side template HoG. |

The weights may be fixed, or they may be determined based on various criteria such as template size, block size, VIPM similarities, etc.

Template prediction based VIPM selection

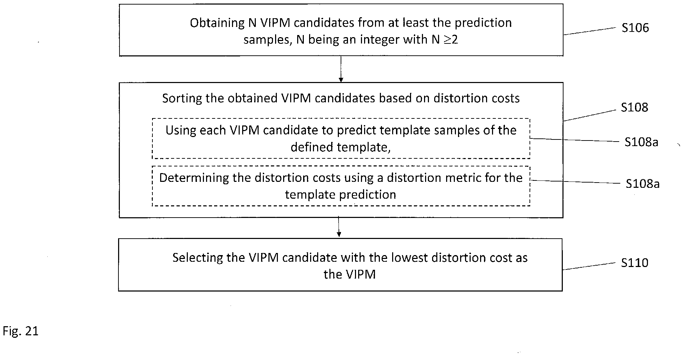

Fig. 21 illustrates a flow diagram of an embodiment of deriving or selecting a VIPM using a template prediction based VIPM selection. The method includes the following:

S106: Obtaining N VIPM candidates from at least the prediction samples, N being an integer with N≥2.
S108: Sorting the obtained VIPM candidates based on distortion costs, wherein the distortion costs may be obtained using a defined template of the reconstructed neighborhood of the block.
S 110: Selecting the VIPM candidate with the lowest distortion cost as the VIPM.

Optionally, sorting the obtained VIPM candidates based on distortion costs may include using S 108a each VIPM candidate to predict template samples of the defined template, and determining S 108b the distortion costs using a distortion metric for the template prediction.

In accordance with embodiments, a set of N virtual-IPM candidate modes may be derived, with N being an integer and with N ≥2. The set of N VIPM candidates may be derived only from the prediction block samples using the texture analysis methods such as DIMD, or they are obtained by using both prediction block samples as well as at least some of the template samples. For example:

- The DIMD-like process may be applied to the prediction block samples and the N best IPMs from its histogram of gradients are selected to form the set of N VIPMs.

- The DIMD-like process may be applied to the prediction block samples and to the template samples of the block. The N best IPMs from the combined HoG, which may be obtained as described above (embodiment "VIPM derivation from template samples and prediction samples"), is selected to form the set of N VIPMs.

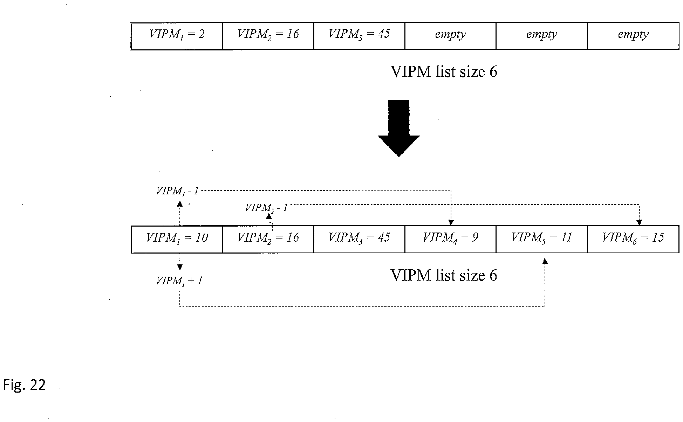

If a set of pre-defined N candidates are not achieved from the above process, the VIPM candidate list may be filled by including nearby VIPM values of the existing ones in the list. An example of such case is shown in Fig. 22 where the initial VIPM candidate list of N = 6 candidates is determined but only 3 VIPMs are obtained by the VIPM generation process. The rest of the list is then filled by the nearby VIPM modes (e.g., VIPM1 $\pm$ 1).

After forming the set of N VIPM candidates, each VIPM is used to predict the template samples of the block. The template samples prediction may be done similarly as in TIMD method.

The set of N VIPMs are then sorted based on their distortion cost over the template. The VIPM candidate with the lowest distortion cost over the template is then selected and used as final VIPM in the transform selection of the block.

The distortion metric for the template prediction may be any existing distortion metrics such as a sum of absolute difference (SAD), a sum of absolute transform difference (SATD), a sum of squared error (SSE).

VIPM derivation in IPM-fusion based methods

IPM-fusion based methods, such as DIMD, TIMD and SGPM, where two or more intra predictions are combined to form the final block prediction, use a primary IPM mode for the transform selection of the block. This may not be an optimal approach as the final prediction texture, after combining individual predictions, may be different than the primary IPM mode's prediction, which may result in using a sub-optimal transform mode.

For addressing this, in accordance with embodiments, a virtual intra prediction mode is derived, using texture analysis method, on the combined prediction. For example, a DIMD-like method is applied to the final prediction (also referred to as the combined or fused prediction) and the VIPM is determined from the final prediction samples of the IPM-fusion based block. The derived VIPM is then used for transform selection of the block. The derived VIPM may be same or different than the intra prediction modes of the IPM-fusion based block.

In accordance with embodiments, also one or more of the above described embodiments "VIPM derivation from template samples and prediction samples" or "Template prediction based VIPM selection" may be used for the VIPM derivation of the IPM-fusion based blocks.

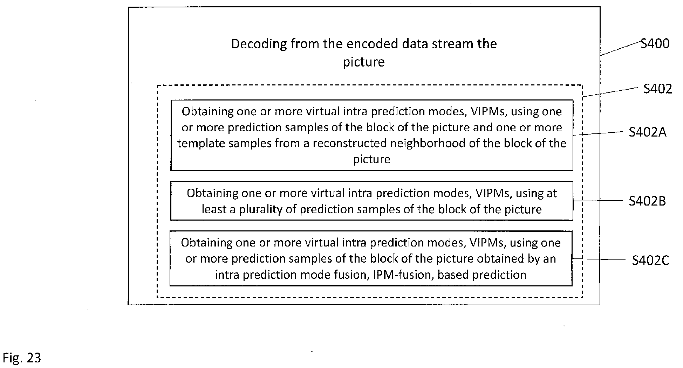

Fig. 23 illustrates a flow diagram of a method for decoding an encoded data stream, the encoded data stream including data representing a picture. The method includes the following:

S400: Decoding from the encoded data stream the picture.

Decoding the picture comprises obtaining S402 one or more virtual intra prediction modes, VIPMs, using S402A one or more prediction samples of the block of the picture and one or more template samples from a reconstructed neighborhood of the block of the picture, or sing S402B at least a plurality of prediction samples of the block of the picture, or using S402C one or more prediction samples of the block of the picture obtained by an intra prediction mode fusion, IPM-fusion, based prediction.

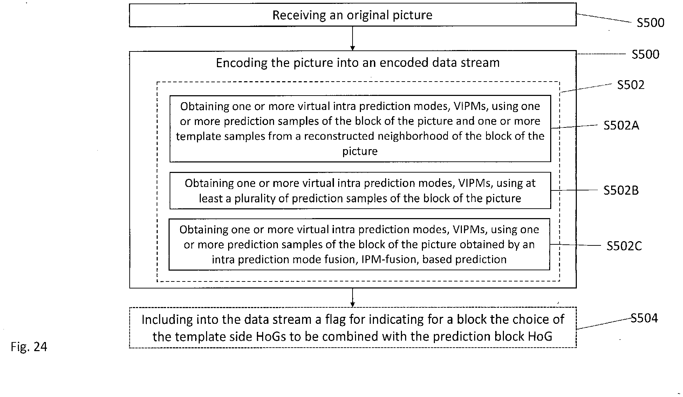

Fig. 24 illustrates a flow diagram of a method for encoding a picture into an encoded data stream. The encoded data stream includes data representing the picture and the method includes the following:

S500: Receiving an original picture.
S502: Encoding the picture into the encoded data stream.

Encoding the picture comprises obtaining S502 one or more virtual intra prediction modes, VIPMs, using S502A one or more prediction samples of the block of the picture and one or more template samples from a reconstructed neighborhood of the block of the picture, or sing S502B at least a plurality of prediction samples of the block of the picture, or using S502C one or more prediction samples of the block of the picture obtained by an intra prediction mode fusion, IPM-fusion, based prediction.

Optionally, the method comprises S504 into the data stream or bitstream a flag for indicating the choice of the template side HoGs to be combined with the prediction block HoG.

Further embodiments

So far, the inventive concept has been described with reference to aspects and embodiments concerning methods of obtaining one or more VIPMs, e.g., for decoding and for encoding. In accordance with further embodiments, the present disclosure also provides an apparatus of obtaining one or more VIPMs as well as encoders/decoders including such an apparatus.

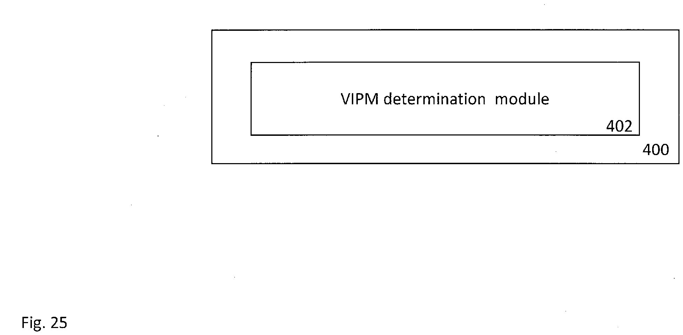

Fig. 25 illustrates a block diagram of an apparatus of predicting one or more blocks of a picture in accordance with embodiments of the present disclosure. The apparatus 400 includes the following modules:

402: A virtual intra prediction mode, VIPM, determination module configured to operate in accordance with embodiments of the present disclosure so as to obtain one or more virtual intra prediction modes, VIPMs, using one or more prediction samples of the block of the picture and one or more template samples from a reconstructed neighborhood of the block of the picture, or using at least a plurality of prediction samples of the block of the picture, or using one or more prediction samples of the block of the picture obtained by an intra prediction mode fusion, IPM-fusion, based prediction.

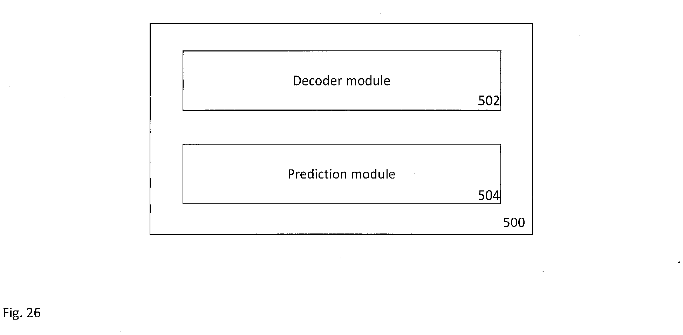

Fig. 26 illustrates a block diagram of a decoder for decoding an encoded data stream in accordance with embodiments of the present disclosure. The encoded data stream includes data representing a picture. The decoder 500 includes the following modules: 502: A decoder module configured to decode from the encoded data stream the picture.

504: A prediction module, e.g., a prediction module 170 as depicted in Fig. 2. The prediction module 502 is configured to operate in accordance with embodiments of the present disclosure so as to obtain one or more virtual intra prediction modes, VIPMs, using one or more prediction samples of the block of the picture and one or more template samples from a reconstructed neighborhood of the block of the picture, or using at least a plurality of prediction samples of the block of the picture, or using one or more prediction samples of the block of the picture obtained by an intra prediction mode fusion, IPM-fusion, based prediction. For example, the prediction module 502 includes an apparatus as described with reference to Fig. 25.

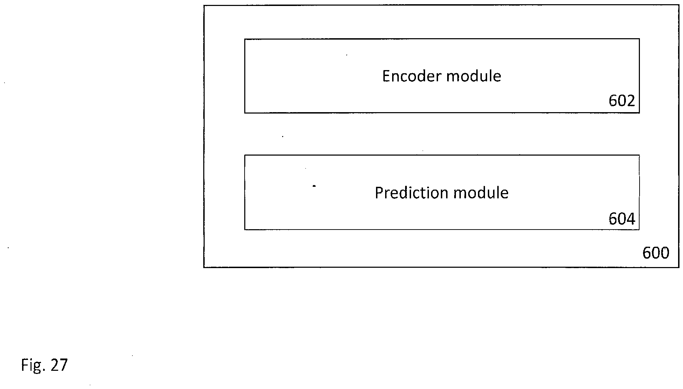

Fig. 27 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream. 604: A prediction module, e.g., a prediction module 124 as depicted in Fig. 1. The prediction module 602 is configured to operate in accordance with embodiments of the present disclosure so as to obtain one or more virtual intra prediction modes, VIPMs, using one or more prediction samples of the block of the picture and one or more template samples from a reconstructed neighborhood of the block of the picture, or using at least a plurality of prediction samples of the block of the picture, or using one or more prediction samples of the block of the picture obtained by an intra prediction mode fusion, IPM-fusion, based prediction. For example, the prediction module 502 includes an apparatus as described with reference to Fig. 25.

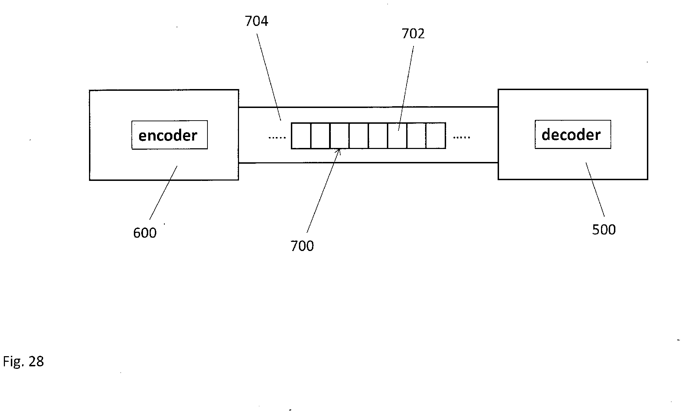

Fig. 28 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream includes a flag 702, which is encoded into the data stream by the encoder 600. The flag indicates for one or more blocks of the picture the choice of the template side HoGs to be combined with the prediction block HoG.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

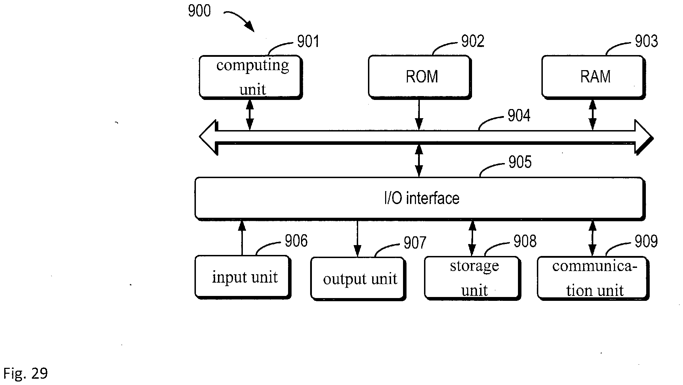

Fig. 29 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising:

obtaining one or more virtual intra prediction modes, VIPMs, using

- one or more prediction samples of the block and one or more template samples from a reconstructed neighborhood of the block, or
- at least a plurality of prediction samples of the block, or
- one or more prediction samples of the block obtained by an intra prediction mode fusion, IPM-fusion, based prediction.

A 2nd embodiment provides the method of the 1st embodiment, wherein the one or more VIPMs are obtained by using a texture analysis method, wherein the texture analysis method maps a texture pattern to corresponding intra directions, e.g., by using a decoder side intra mode derivation, DIMD, process or a template-based intra mode derivation, TIMD, process.

A 3rd embodiment provides the method of the 1st or 2nd embodiment, wherein, for obtaining the one or more VIPMs using the one or more prediction samples and the one or more template samples, the method comprises:

- selecting one or more of the template samples, and
- using the selected template samples and the prediction samples for obtaining the VIPM.

A 4th embodiment provides the method of the 3rd embodiment, wherein

- at least one of a plurality of template histograms of gradients, template HoGs, is selected for combining with a prediction HoG into a combined HoG, and
- an intra mode having a highest amplitude in the combined HoG is selected as the VIPM.

A 5th embodiment provides the method of the 4th embodiment,

wherein the reconstructed neighborhood of the block includes an above template and a left side template,

wherein a prediction histogram of gradients, prediction HoG, is obtained using the one or more prediction samples, wherein an above template histogram of gradients, above template HoG, is obtained using one or more above template samples, and wherein a left side template histogram of gradients, left side template HoG, is obtained using one or more left side template samples, and

wherein at least one of the above and left side template HoGs is selected for combining with the prediction HoG into a combined HoG.

A 6th embodiment provides method of the 5th embodiment, wherein the prediction HoG and at least one of the above template HoG and the left side template HoG are combined into the combined HoG using a-proper subset of information from the above template HoG and/or from the left side template HoG.

A 7th embodiment provides the method of the 6th embodiment, wherein the proper subset of information includes a certain number of gradients from the above template HoG and/or from the left side template HoG, wherein the certain number of gradients are located around a certain VIPM in the prediction HoG, e.g., a largest VIPM in the prediction HoG.

An 8th embodiment provides the any one of the 5th to 7th embodiments, wherein the one or more of the template samples are selected according to a similarity between the template samples and the prediction samples.

A 9th embodiment provides the method of the 8th embodiment, comprising:

- comparing each of the above template HoG and the left side template HoG with the prediction HoG,
- determining the similarity of each of the above template HoG and the left side template HoG with the prediction HoG, and
- combining the above template HoG and the left side template HoG with the prediction HoG dependent on the determined similarity.

A 10th embodiment provides the method of the 9th embodiment, wherein the similarity is determined using the VIPMs of the template samples and the VIPM of the prediction samples.

An 11th embodiment provides the method of the 10th embodiment, wherein the similarity of the above template HoG and the left side template HoG to the prediction HoG is determined by comparing the best VIPMs of the prediction block, the above template HoG and the left side template HoG.

A 12th embodiment provides the method of any one of the 5th to 7th embodiments, wherein the similarity between the template samples and the prediction samples is determined using a mean value of the prediction samples and a mean value of the template samples, e.g., Direct-Current, DC, or average values of the prediction samples, and DC or average values of the template samples.

A 13th embodiment provides the method of the 12th embodiment, comprising:

- comparing the DC or average values of the prediction samples and the DC or average values of each of the above and left side template samples,
- determining a similarity of the DC or average values of each of the above and left side template samples to the DC or average values of the prediction samples, and
- combining the above template HoG and the left side template HoG with the prediction HoG dependent on the determined similarities.

A 14th embodiment provides the method of any one of the 8th to 13th embodiments, wherein, if the similarities of both the above template and the left side template are greater than a certain threshold, combining the above template HoG and the left side template HoG with the prediction HoG.

A 15th embodiment provides the method of any one of the 8th to 14th embodiments, wherein, if the similarity of the above template is greater than the certain threshold and the similarity of the left side template is less than the certain threshold, combining the above template HoG with the prediction HoG.

A 16th embodiment provides the method of any one of the 8th to 15th embodiments, wherein, if the similarity of the above template is less than the certain threshold and the similarity of the left side template is greater than the certain threshold, combining the left side template HoG with the prediction HoG.

A 17th embodiment provides the method of any one of the 8th to 16th embodiments, wherein, if the similarities of both the above template and the left side template are less than the certain threshold, combining the template HoG having a similarity closer to the certain threshold with the prediction HoG.

An 18th embodiment provides the method of any one of the 5th to 7th embodiments, wherein the one or more of the template samples are selected according to an index or a flag identifying the template samples to be selected.

A 19th embodiment provides the method of the 18th embodiment, wherein the index or the flag is obtained from a data stream, e.g., a bitstream, including data representing the picture.

A 20th embodiment provides the method of the 18th or 19th embodiment, wherein the index or the flag includes:

- a first value indicting that both the above template HoG and the left side template HoG are to be combined with the prediction HoG,
- a second value indicting that only the above template HoG is to be combined with the prediction HoG, and
- a third value indicting that only the left side template HoG is to be combined with the prediction HoG.

A 21st embodiment provides the method of any one of the 5th to 20th embodiments, comprising:

- weighting one or more of the prediction HoG, the above template HoG and the left side template HoG before combining them into the combined HoG.

A 22nd embodiment provides the method of the 21st embodiment, wherein the combined HoG is determined as follows:

$$\mathrm{HoG_{comb}[IPM]} = W_1 \times \mathrm{HoG_{Pred}[IPM]} + W_2 \times \mathrm{HoG_{aboveTmp}[IPM]} + W_3 \times \mathrm{HoG_{leftTmp}[IPM]}$$

where

| | |
|---|---|
| $\mathrm{HoG_{comb}[IPM]}$ | combined HoG, |
| $\mathrm{HoG_{pred}[IPM]}$ | prediction HoG |
| $\mathrm{HoG_{aboveTmp}[IPM]}$ | above template HoG |
| $\mathrm{HoG_{leftTmp}[IPM]}$ | left side template HoG |
| Wi | weight for the prediction HoG, |
| Wz | weight for the above template HoG, and |
| $W_3$ | weight for the left side template HoG. |

A 23rd embodiment provides the method of the 22nd embodiment, wherein the weights are fixed.

A 24th embodiment provides the method of the 22nd embodiment, wherein the weights are obtained based on one or more criteria, e.g., a template size, a block size, VIPM similarities.

A 25th embodiment provides the method of any one of the 4th to 24th embodiments, comprising:

- testing at least two combinations of the prediction samples with the above template samples and the left side template samples,
- selecting a best preforming combination, e.g., according to a rate-distortion optimization, and
- inserting an index or a flag into a data stream, e.g., a bitstream, including data representing the picture, wherein the index or the flag identifies the selected combination.

A 26th embodiment provides the method of any one of the preceding embodiments, wherein, for obtaining the one or more VIPMs using at least the plurality of prediction samples, the method comprises:

- obtaining N VIPM candidates from at least the prediction samples, N being an integer with $N \geq 2$,
- sorting the obtained VIPM candidates based on distortion costs, wherein the distortion costs may be obtained using a defined template of the reconstructed neighborhood of the block, and
- selecting the VIPM candidate with the lowest distortion cost as the VIPM.

A 27th embodiment provides the method of the 26th embodiment, comprising

- using each VIPM candidate to predict template samples of the defined template, and
- determining the distortion costs using a distortion metric for the template prediction.

A 28th embodiment provides the method of the 27th embodiment, wherein the template samples are predicted using a template-based intra mode derivation, TIMD, process.

A 29th embodiment provides the method of the 27th or 28th embodiment, wherein the distortion metric for the template prediction is determined using one or more of the following:

- a sum of absolute difference, SAD,
- a sum of absolute transform difference, SATD,
- a sum of squared error, SSE.

A 30th embodiment provides the method of any one of the 26th to 29th embodiments, wherein obtaining the N VIPM candidates comprises

- deriving the N VIPM from the prediction block samples using a texture analysis methods, e.g., using a DIMD process, or
- obtaining the N VIPM by using both prediction block samples as well as at least some of the template samples.

A 31st embodiment provides the method of the 30th embodiment, wherein a histogram of gradients, HoG, is obtained for the prediction block samples, and wherein from the HoG a certain number of IPMs is included into a VIPM candidate list, e.g., the n best IPMs, with n=N or $n \leq N$.

A 32nd embodiment provides the method of the 30th embodiment, wherein respective histograms of gradients, HoGs, are obtained for the prediction block samples and for the template samples, and wherein from each of the HoGs a certain number of IPMs is included into a VIPM candidate list, e.g., the respective best IPMs.

A 33rd embodiment provides the method of the 31st or 32nd embodiment, wherein, if the VIPM candidate list includes less than the N VIPM candidates, the method comprises:

- filling the VIPM candidate list by including VIPM values from the one or more HoGs, which are nearby of the obtained VIPM candidates.

A 34th embodiment provides the method of any one of the preceding embodiments, wherein the one or more prediction samples of the block are obtained by

- a regular IPM prediction obtaining prediction samples by means of angular intra prediction modes, or a planar prediction, or a DC prediction, or
- a non-IPM based prediction obtaining prediction samples by means of methods that do not use regular intra prediction methods, or

- an IPM-fusion based prediction obtaining prediction samples by means of combining two or more regular IPMs, or one or more regular IPMs with a non-IPM based prediction.

A 35th embodiment provides the method of the 34th embodiment, wherein the non-IPM based prediction includes:

- a matrix-based intra prediction, MIP, or
- an extrapolation filter-based intra prediction, EIP, or
- an intra template matching prediction, intraTMP, or
- using an intra block copy, IBC, or
- using inter predicted blocks.

A 36th embodiment provides the method of the 34th or 35th embodiment, wherein the IPM-fusion based prediction includes:

- a fusion for template-based intra mode derivation, TIMD, or
- a decoder side intra mode derivation, DIMD, or
- a spatial geometric partitioning mode, SGPM.

A 37th embodiment provides the method of one of the preceding embodiments, wherein, for obtaining the one or more VIPMs using one or more prediction samples of the block obtained by the IPM-fusion based prediction, the method comprises: -

- deriving the VIPM using a texture analysis method on a combined prediction obtained by the IPM-fusion, based prediction.

A 38th embodiment provides the method of the 37th embodiment, wherein the texture analysis method includes a DIMD process applied to the combined prediction, and wherein the VIPM is obtained from the final prediction samples of the IPM-fusion based prediction.

A 39th embodiment provides the method of the 37th or 38th embodiment, wherein the IPM-fusion based prediction includes obtaining prediction samples by means of combining two or more regular IPMs, or one or more regular IPMs with a non-IPM based prediction.

A 40th embodiment provides the method of any one of the 37th to 39th embodiments, wherein the IPM-fusion based prediction includes:

- a fusion for template-based intra mode derivation, TIMD, or
- a decoder side intra mode derivation, DIMD, or
- a spatial geometric partitioning mode, SGPM.

A 41st embodiment provides the method of any one of the preceding embodiments, wherein the obtained one or more VIPMs are used for a transform selection of the block.

A 42nd embodiment provides the method of the 41st embodiment, wherein the transform includes:

- a multiple transform selection, MTS, or
- a low-frequency non-separable transform, LFNST, or
- a non-separable primary transform, NSPT, or
- any other transform coding mechanism that relies on an intra prediction direction for determining transform coding of the block.

A 43rd embodiment provides the method of any one of the preceding embodiments, wherein the obtained one or more VIPMs are stored for use for an intra prediction of one or more future blocks.

A 44th embodiment provides the method of the 43rd embodiment, wherein the obtained one or more VIPMs are used in a most probable mode, MPM, of the one or more future blocks.

A 45th embodiment provides the method of the 43rd embodiment, wherein the obtained one or more VIPMs are used in an intra prediction of the one or more of the future blocks in a different channel, e.g., a chroma block may use a VIPM of a co-located luma block in intra prediction through direct mode, DM, or MPM.

A 46th embodiment provides the method of any one of the preceding embodiments, wherein the obtained one or more VIPMs are used for a transform selection of one or more future blocks.

A 47th embodiment provides the method of the 46th embodiment, wherein the obtained one or more VIPMs are used for the transform selection of another block in a different channel, e.g., a chroma block may use a VIPM of the co-located luma block for the transform selection.

A 48th embodiment provides a method for decoding an encoded data stream, the encoded data stream including data representing a picture, the method comprising:

decoding from the encoded data stream the picture,

wherein decoding the picture includes processing one or more blocks of a picture according to the method of any one of the preceding embodiments for obtaining one or more virtual intra prediction modes, VIPMs.

A 49th embodiment provides a method for encoding a picture into an encoded data stream, the encoded data stream including data representing the picture, the method comprising:

receiving an original picture, and

encoding the picture into the encoded data stream,

wherein encoding the picture includes processing one or more blocks of a picture according to the method of any one of the preceding embodiments for obtaining one or more virtual intra prediction modes, VIPMs.

A 50th embodiment provides a non-transitory computer-readable storage medium comprising instructions which, when executed by a computer, cause the computer to carry out the method of any one of the preceding embodiments.

A 51st embodiment provides an apparatus of processing one or more blocks of a picture, the apparatus comprising: a virtual intra prediction mode, VIPM, determination module configured to obtain one or VIPMs using

- one or more prediction samples of the block and one or more template samples from a reconstructed neighborhood of the block, or
- at least a plurality of prediction samples of the block, or
- one or more prediction samples of the block obtained by an intra prediction mode fusion, IPM-fusion, based prediction.

A 52nd embodiment provides an apparatus for decoding an encoded data stream, the encoded data stream including data representing a picture, the apparatus comprising:

a decoder module configured to decode from the encoded data stream the picture, and

a prediction module, the prediction module including an apparatus according to the 51st embodiment.

A 53rd embodiment provides an apparatus for encoding a picture into an encoded data stream, the encoded data stream including data representing the picture, the apparatus comprising:

an encoder module configured to receive the original picture and to encode the picture into the encoded data stream, and

a prediction module, the prediction module including an apparatus according to the 51st embodiment.

A 54 embodiment provides a data stream having encoded thereinto a picture, wherein the data stream comprises: a flag, the flag indicating a best preforming combination of one or more prediction samples of a block of the picture with one or more template samples from a reconstructed neighborhood of the block for obtaining one or more virtual intra prediction modes, VIPMs, usable for a transform selection of the block.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audio-visual services, https://www.itu.int/rec/T-REC-H.264-202108-P/en

[2] H.265: High efficiency video coding, https://www.itu.int/rec/T-REC-H.265-202108-P/en

[3] H.266: Versatile video coding, https://www.itu.int/rec/T-REC-H.266-202008-I/en

[4] AV1 Bitstream & Decoding Process Specification, http://aomedia.org/av1/specification/

**Claims**

1. A method of processing one or more blocks of a picture, the method comprising:
obtaining one or more virtual intra prediction modes, VIPMs, using

   - one or more prediction samples of the block and one or more template samples from a reconstructed neighborhood of the block, or
   - at least a plurality of prediction samples of the block, or
   - one or more prediction samples of the block obtained by an intra prediction mode fusion, IPM-fusion, based prediction.

2. The method of claim 1, wherein the one or more VIPMs are obtained by using a texture analysis method, wherein the texture analysis method maps a texture pattern to corresponding intra directions, e.g., by using a decoder side intra mode derivation, DIMD, process or a template-based intra mode derivation, TIMD, process.

3. The method of claim 1 or 2, wherein, for obtaining the one or more VIPMs using the one or more prediction samples and the one or more template samples, the method comprises:

   - selecting one or more of the template samples, and
   - using the selected template samples and the prediction samples for obtaining the VIPM.

4. The method of claim 3, wherein

   - at least one of a plurality of template histograms of gradients, template HoGs, is selected for combining with a prediction HoG into a combined HoG, and
   - an intra mode having a highest amplitude in the combined HoG is selected as the VIPM.

5. The method of claim 3 or 4, wherein the one or more of the template samples are selected according to

   - a similarity between the template samples and the prediction samples, or
   - an index or a flag identifying the one or more templates to be selected,

   wherein the similarity may include one or more of the following:

   - a similarity of the VIPMs of the template and prediction samples, or
   - a similarity of mean values of the template and prediction samples.

6. The method of any one of claims 4 to 7, comprising:

   - testing at least two combinations of the prediction samples with the above template samples and the left side template samples,
   - selecting a best preforming combination, e.g., according to a rate-distortion optimization, and
   - inserting an index or a flag into a data stream, e.g., a bitstream, including data representing the picture, wherein the index or the flag identifies the selected combination.

7. The method of any one of the preceding claims, wherein, for obtaining the one or more VIPMs using at least the plurality of prediction samples, the method comprises:

   - obtaining N VIPM candidates from at least the prediction samples, N being an integer with $N \geq 2$,
   - sorting the obtained VIPM candidates based on distortion costs, wherein the distortion costs may be obtained using a defined template of the reconstructed neighborhood of the block, and

- selecting the VIPM candidate with the lowest distortion cost as the VIPM.

8. The method of claim 7, comprising

- using each VIPM candidate to predict template samples of the defined template, and
- determining the distortion costs using a distortion metric for the template prediction.

9. The method of claim 8, wherein the template samples are predicted using a template-based intra mode derivation, TIMD, process.

10. The method of any one of claims 7 to 9, wherein

a histogram of gradients, HoG, is obtained for the prediction block samples, and wherein from the HoG a certain number of IPMs is included into a VIPM candidate list, e.g., the n best IPMs, with n=N or n≤N, or respective histograms of gradients, HoGs, are obtained for the prediction block samples and for the template samples, and wherein from each of the HoGs a certain number of IPMs is included into a VIPM candidate list, e.g., the respective best IPMs, and wherein, if the VIPM candidate list includes less than the N VIPM candidates, the method may comprise:

- filling the VIPM candidate list by including VIPM values from the one or more HoGs, which are nearby of the obtained VIPM candidates.

11. The method of any one of the preceding claims, wherein, for obtaining the one or more VIPMs using one or more prediction samples of the block obtained by the IPM-fusion based prediction, the method comprises:

- deriving the VIPM using a texture analysis method on a combined prediction obtained by the IPM-fusion, based prediction,

wherein the texture analysis method may include a DIMD process applied to the combined prediction, and wherein the VIPM may be obtained from the final prediction samples of the IPM-fusion based prediction.

12. The method of any one of the preceding claims, wherein the obtained one or more VIPMs are used for a transform selection of the block and/or for a transform selection of one or more future blocks,

wherein the obtained one or more VIPMs may be stored for use for an intra prediction of one or more future blocks, and
wherein the obtained one or more VIPMs may be used for the transform selection of another block in a different channel, e.g., a chroma block may use a VIPM of the co-located luma block for the transform selection.

13. A non-transitory computer-readable storage medium comprising instructions which, when executed by a computer, cause the computer to carry out the method of any one of the preceding claims.

14. An apparatus of processing one or more blocks of a picture, the apparatus comprising:
a virtual intra prediction mode, VIPM, determination module configured to obtain one or VIPMs using

- one or more prediction samples of the block and one or more template samples from a reconstructed neighborhood of the block, or
- at least a plurality of prediction samples of the block, or
- one or more prediction samples of the block obtained by an intra prediction mode fusion, IPM-fusion, based prediction.

15. A data stream having encoded thereinto a picture, wherein the data stream comprises:
a flag, the flag indicating a best preforming combination of one or more prediction samples of a block of the picture with one or more template samples from a reconstructed neighborhood of the block for obtaining one or more virtual intra prediction modes, VIPMs, usable for a transform selection of the block.

Fig. 1

Fig. 2

Fig. 3

(A)

(B)

Fig. 4

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 |  |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 |  |  |

Fig. 5

Fig. 6

Fig. 7

amplitude

HoG

IntraPrediction Mode

Fig. 8

Fig. 9

input of EIP

output of EIP

Fig. 10

Fig. 11

Fig. 12

```
If( cu_sgpm_flag )
{
  partition_mode_idx
  intra_pred_mode0_idx
  intra_pred_mode1_idx
}
```

```
If( cu_sgpm_flag )
{
  sgpm_cand_idx
}
```
```
partition_mode_idx
intra_pred_mode0_idx
intra_pred_mode1_idx
```

Fig. 13

Fig. 14

GPM partitioning boundary

Fig. 15

Fig. 16

(A)

| Obtaining one or more virtual intra prediction modes, VIPMs, using one or more prediction samples of the block of the picture and one or more template samples from a reconstructed neighborhood of the block of the picture |

S100A

(B)

| Obtaining one or more virtual intra prediction modes, VIPMs, using at least a plurality of prediction samples of the block of the picture |

S100B

(C)

| Obtaining one or more virtual intra prediction modes, VIPMs, using one or more prediction samples of the block of the picture obtained by an intra prediction mode fusion, IPM-fusion, based prediction |

S100C

Fig. 17

Selecting one or more of the template samples — S102

Selecting at least one of a plurality of template histograms of gradients, template HoGs, for combining with a prediction HoG into a combined HoG — S102a

Using the selected template samples and the prediction samples for obtaining the VIPM — S104

Selecting an intra mode having a highest amplitude in the combined HoG as the VIPM — S104a

Fig. 18

Fig. 19

Fig. 20

Obtaining N VIPM candidates from at least the prediction samples, N being an integer with N ≥2 — S106

Sorting the obtained VIPM candidates based on distortion costs — S108

Using each VIPM candidate to predict template samples of the defined template, — S108a

Determining the distortion costs using a distortion metric for the template prediction — S108a

Selecting the VIPM candidate with the lowest distortion cost as the VIPM — S110

Fig. 21

| $VIPM_1 = 2$ | $VIPM_2 = 16$ | $VIPM_3 = 45$ | empty | empty | empty |

VIPM list size 6

| $VIPM_1 = 10$ | $VIPM_2 = 16$ | $VIPM_3 = 45$ | $VIPM_4 = 9$ | $VIPM_5 = 11$ | $VIPM_6 = 15$ |

$VIPM_1 - 1$

$VIPM_2 - 1$

$VIPM_1 + 1$

VIPM list size 6

Fig. 22

Decoding from the encoded data stream the picture — S400

S402

Obtaining one or more virtual intra prediction modes, VIPMs, using one or more prediction samples of the block of the picture and one or more template samples from a reconstructed neighborhood of the block of the picture — S402A

Obtaining one or more virtual intra prediction modes, VIPMs, using at least a plurality of prediction samples of the block of the picture — S402B

Obtaining one or more virtual intra prediction modes, VIPMs, using one or more prediction samples of the block of the picture obtained by an intra prediction mode fusion, IPM-fusion, based prediction — S402C

Fig. 23

Receiving an original picture — S500

Encoding the picture into an encoded data stream — S500

— S502

Obtaining one or more virtual intra prediction modes, VIPMs, using one or more prediction samples of the block of the picture and one or more template samples from a reconstructed neighborhood of the block of the picture — S502A

Obtaining one or more virtual intra prediction modes, VIPMs, using at least a plurality of prediction samples of the block of the picture — S502B

Obtaining one or more virtual intra prediction modes, VIPMs, using one or more prediction samples of the block of the picture obtained by an intra prediction mode fusion, IPM-fusion, based prediction — S502C

Including into the data stream a flag for indicating for a block the choice of the template side HoGs to be combined with the prediction block HoG — S504

Fig. 24

VIPM determination module

402

400

Fig. 25

Decoder module

502

Prediction module

504

500

Fig. 26

Encoder module

602

Prediction module

604

600

Fig. 27

704

702

encoder

..... □□□□□□□□ .....

decoder

600

700

500

Fig. 28

900

901
computing
unit

902
ROM

903
RAM

904

905
I/O interface

906
input unit

907
output unit

908
storage
unit

909
communica-
tion unit

Fig. 29

Europäisches Patentamt
European Patent Office
Office européen des brevets

# EUROPEAN SEARCH REPORT

**Application Number**

EP 24 31 5289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/241347 A1 (MEDIATEK INC [CN]) 21 December 2023 (2023-12-21) <br> * page 6, line 13 - page 8, line 5 * <br> * page 12, line 16 - line 35 * <br> ----- | 1-15 | INV. <br> H04N19/105 <br> H04N19/147 <br> H04N19/159 <br> H04N19/176 |
| Y | WANG (OPPO) F ET AL: "EE2-3.3: Utilizing LFNST/NSPT for inter coding", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0061 11 January 2024 (2024-01-11), XP030313877, Retrieved from the Internet: URL:https://jvet-experts.org/doc_end_user/ documents/33_Teleconference/wg11/JVET-AG00 61-v1.zip JVET-AG0061-v1.docx [retrieved on 2024-01-11] * Section 2 * ----- | 1-15 | H04N19/593 |

**TECHNICAL FIELDS SEARCHED (IPC)**

H04N

The present search report has been drawn up for all claims

| Place of search | Date of completion of the search | Examiner |
|---|---|---|
| Munich | 13 November 2024 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      ...................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5289

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | Publication date | Patent family member(s) | Publication date |
|---|---|---|---|
| WO 2023241347 A1 | 21-12-2023 | TW 202406334 A<br>WO 2023241347 A1 | 01-02-2024<br>21-12-2023 |

For more details about this annex : see Official Journal of the European Patent Office, No. 12/82